# EUROPEAN PATENT SPECIFICATION

(11) **EP 1 300 534 B1**
(45) Date of publication and mention of the grant of the patent: **04.01.2006**
(21) Application number: 02022220.4
(22) Date of filing: 01.10.2002
(51) Int. Cl.: E05B 65/12, E05C 19/02, B60N 3/08

(54) **Receptacle assembly with a case pivotally mounted in a housing shell**
Behälteranordnung mit einem in einer Schwenkbar montierten Gehäuseschalengehäuse
Assemblage d'un organe récepteur avec un boîtier pivotant monté dans une coque de boîtier

(30) Priority: 02.10.2001 DE 20116159 U
(43) Date of publication of application: 09.04.2003
(73) Proprietor: TRW Automotive Electronics & Components GmbH & Co. KG, 67677 Enkenbach/Alsenborn (DE)
(72) Inventor: Galijasevic, Sasa, 67659 Kaiserslautern (DE)
(74) Representative: Degwert, Hartmut

(56) References cited:
- EP-A- 0 894 662
- DE-A- 4 130 847
- DE-C- 4 427 768
- FR-A- 2 579 181
- US-A- 5 052 728
- US-B1- 6 213 533

## Description

The present invention relates to a receptacle assembly according to the preamble of claim 1.

Examples of such a case are ashtrays, coin holders and glove compartments in vehicles. In order to move the case out of the open position to the closed position, an upper edge of the case is pushed until the closed position has been reached. A latch mechanism ensures that the case is maintained in the closed position. In order to move to the open position, the case is pushed again, as a result of which it is unlatched and moved automatically to the open position under the action of the spring.

In order to prevent accidental unlatching of the case with subsequent movement into the open position, under the action of inertial forces, for example, it is known from DE-C-44 27 768 to mount a spring-stressed weight so that it can be slid onto a locking lever that interacts with the latching mechanism, the weight being movable into a deflected position in which it interacts with a stop on the shell in order to block the locking lever. As a result, however, the already complicated latching mechanism becomes even more complex.

US-B-6,213,533 discloses a drawer which is pivotally mounted in a box-shaped housing. The drawer is movable from a closed position to an open position by exerting a pressure against a front panel of the drawer which moves the drawer in a pushed position. A lock member is provided which is movable under inertial forces from a base stop to an end stop. When the latch lies against the end stop, it extends into the path of the drawer for being moved from the closed position to the pushed position so that an unwanted opening of the drawer under the influence of inertial forces is prevented.

US-A-5,052,728 discloses a movable body which is arranged to be slidable on a base plate. The base plate is provided with a cam lever for locking the movable body at its closed position. The cam lever cooperates with a pin projecting downward from the movable body. An inertia stopper is provided which is movable under the influence of inertial forces to prevent an unwanted movement of the movable body.

The invention provides a receptacle assembly that uses very simple means to prevent unlatching of the case under the influence of inertial forces.

Specifically, the blocking device includes an engagement member attached to one of the case and the housing shell, the blocking body being movably mounted on the other of said case and housing shell. The blocking body has a shaped structure and the engagement member also has a shaped structure. In the preferred embodiment, the blocking body has a notch and the engagement member has a projection. The projection fits into the notch when the blocking member is in the normal rest position and the case is in the pushed position, but the projection on the notch of the engagement member abuts the blocking body when the blocking body is in the active blocking position and the case moves from the closed position towards the pushed position. The blocking device is reduced to just a few components that are easily produced by injection molding of plastics.

Further features and advantages of the invention ensue from the description below of an embodiment and from the drawing to which reference is made. In the drawings:
Figure 1 is a schematic front view of a receptacle assembly with a housing shell and a case pivotally mounted in the shell;
Figure 2 is a schematic side view of the assembly;
Figure 3 is a schematic sectional view of the assembly where the case is shown in a closed position;
Figure 4 is a similar view but showing the case in a pushed position beyond the closed position; and
Figure 5 is a sectional view of the assembly showing the case blocked in the closed position.

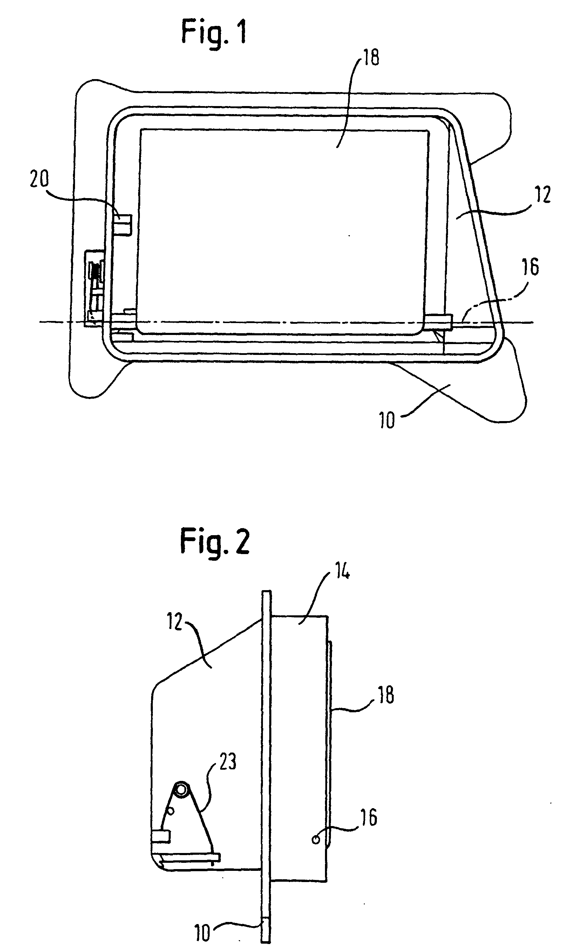

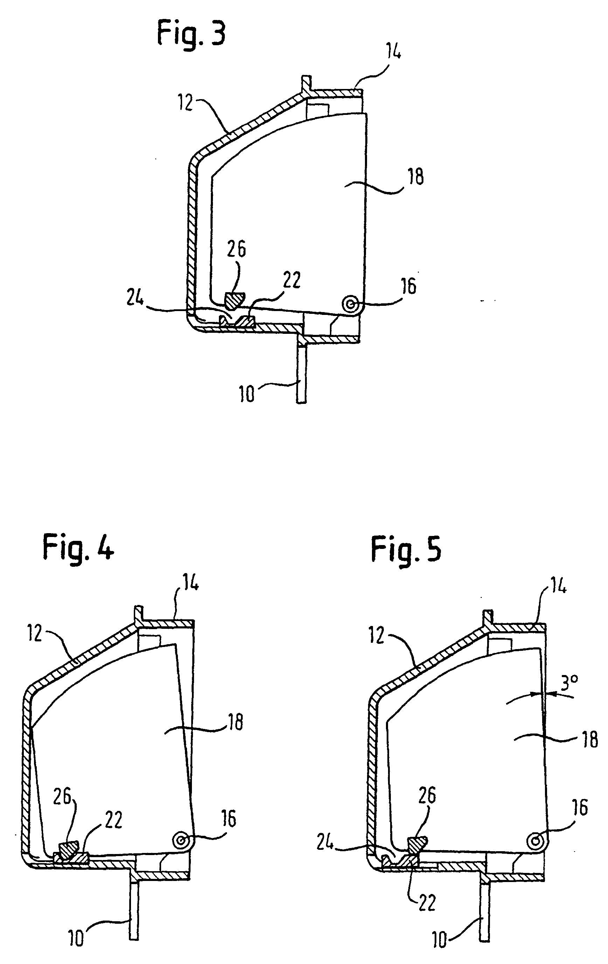

The embodiment shown in the drawings is an ashtray assembly for installation into a vehicle door. The ashtray assembly has a flange-like frame **10,** a trough-like housing shell **12** and a collar **14** that projects away from the flange on the side opposite from the housing shell **12.** In the housing shell, a case **18** is pivotally mounted on an axis **16.** As usual, the case **18** is a cup-shaped component that is open at the top. The case **18** is biased by an actuation spring (not shown here) into its open position in which it is largely pivoted out of the housing shell. A latching mechanism **20,** only shown schematically in Figure 1, maintains the case **18** in the closed position shown in Figure 3. Case 18 is unlatched and released from the closed position by pushing against its upper section to be pivoted into a pushed position. Unlatched, the case 18 swings to the open position under the action of the actuation spring.

On the bottom of the housing shell **12,** an internal groove is formed in which a blocking body **22** is slidingly guided. The blocking body **22** is biased into a normal inactive position shown in Figure 3 by a return spring **24** (Figure 2). On the surface facing the case **18,** the blocking body **22** is provided with a notch **24** that lies across from a nose-like projection **26** on the bottom of the case **18.** When the case **18** is pivoted out of the closed position shown in Figure 3 into the pushed position shown in Figure 4, then the projection **26** enters the notch **24** of the blocking body **22.** In the embodiment shown, the case **18** is pivoted by an angle of about 7° from the closed position to the pushed position.

When an impact acts upon the ashtray assembly, for example, when a vehicle door is slammed in which the assembly is installed, then the blocking body **22** is displaced under the effect of inertial forces into a deflected active position shown in Figure 5. In this position of the blocking body **22,** the notch **24** is no more aligned with the projection **26** and the projection now strikes the blocking body when the case **18** attempts to pivot towards the pushed position due to inertial forces. As a result of the blocking body **22** being in the active position, the pivotal movement of the case 18 is limited to a small angle of, for example, 3°, so that the pushed position required for unlatching is not reached. Therefore, the case **18** remains in its closed position.

## Claims

1. A receptacle assembly including a housing shell (12), a case (18) that is pivotally mounted in the shell (12) to be movable between an open position and a closed position, a spring biasing the case (18) to the open position and a latching mechanism (20) for latching the case (18) in the closed position, the latching mechanism (20) releasing the case (18) from the closed position under the action of a push onto the case (18) against the force of the spring moving the case (18) to a pushed position, and the receptacle assembly further comprising a blocking device with a blocking body (22) that is spring biased to a normal rest position and movable under inertial forces to an active blocking position, the blocking body (22) in the normal rest position permitting free pivotal movement of the case (18) and, in the blocking position, blocking movement of the case (18) from the closed to the pushed position, **characterized in that** the blocking device includes an engagement member (26) attached to one of the case (18) and the housing shell (12), the blocking body (22) being movably mounted on the other of said case (18) and housing shell (12), the blocking body (22) having a shaped structure (24) and the engagement member (26) also having a shaped structure, said shaped structures (24) fitting into each other when the blocking body (22) is in said normal rest position and the case (18) is in the pushed position, and the engagement member (26) abutting the blocking body (22) when the blocking body (22) is in said active blocking position and the case (18) moves from the closed position towards the pushed position.

2. The assembly according to Claim 1, **characterized in that** the blocking body (22) is movably mounted on the housing shell (12).

3. The assembly according to Claim 1 or Claim 2, **characterized in that** the blocking body (22) is movable in translation.

4. The assembly according to any of Claims 1 to 3, **characterized in that** the blocking body (22) is guided in a groove shaped into the housing shell (12).

5. The assembly according to Claim 1, **characterized in that** the shaped structure of the blocking body (22) is a notch (24).

## Patentansprüche

1. Behälteranordnung mit einem Gehäusekörper (12), einem Einsatz (18), der im Körper (12) schwenkbar gelagert und zwischen einer Offenstellung und einer Schließstellung bewegbar ist, einer Feder, die den Einsatz (18) in die Offenstellung beaufschlagt, und einem Verriegelungsmechanismus (20) zur Verriegelung des Einsatzes (18) in der Schließstellung, wobei der Verriegelungsmechanismus (20) den Einsatz (18) durch Druckausübung auf den Einsatz (18) entgegen der Kraft der Feder aus der Schließstellung löst und der Einsatz (18) in eine gedrückte Stellung bewegt wird, und wobei die Behälteranordnung ferner eine Sperrvorrichtung mit einem Sperrkörper (22) umfasst, der in eine normale Ruhestellung federbelastet und unter der Wirkung von Trägheitskräften in eine aktive Sperrstellung bewegbar ist, wobei der Sperrkörper (22) in der normalen Ruhestellung eine freie Schwenkbewegung des Einsatzes (18) zulässt und in der Sperrstellung die Bewegung des Einsatzes (18) aus der Schließstellung in die gedrückte Stellung sperrt, **dadurch gekennzeichnet, dass** die Sperrvorrichtung ein Eingriffselement (26) aufweist, das am Einsatz (18) oder am Gehäusekörper (12) befestigt ist, wobei der Sperrkörper (22) am jeweils anderen der Elemente Einsatz (18) und Gehäusekörper (12) beweglich gelagert ist, wobei der Sperrkörper (22) eine Gestaltung (24) hat und das Eingriffselement (26) ebenfalls eine Gestaltung hat, wobei die Gestaltungen (24) ineinander passen, wenn der Sperrkörper (22) sich in der normalen Ruhestellung und der Einsatz (18) sich in der gedrückten Stellung befindet, und wobei das Eingriffselement (26) am Sperrkörper (22) anstößt, wenn der Sperrkörper (22) sich in der aktiven Sperrstellung befindet und der Einsatz (18) sich aus der Schließstellung auf die gedrückte Stellung zu bewegt.

2. Anordnung nach Anspruch 1, **dadurch gekennzeichnet, dass** der Sperrkörper (22) beweglich am Gehäusekörper (12) gelagert ist.

3. Anordnung nach Anspruch 1 oder Anspruch 2, **dadurch gekennzeichnet, dass** der Sperrkörper (22) translatorisch verschiebbar ist.

4. Anordnung nach einem der Ansprüche 1 bis 3, **dadurch gekennzeichnet, dass** der Sperrkörper (22) in einer in den Gehäusekörper (12) eingeformten Nut geführt ist.

5. Anordnung nach Anspruch 1, **dadurch gekennzeichnet, dass** die Gestaltung des Sperrkörpers (22) eine Mulde (24) ist.

## Revendications

1. Agencement de réceptacle, comprenant un corps de boîtier (12), un récipient (18) qui est monté à pivotement dans le corps (12) et qui peut être déplacé entre une position d'ouverture et une position de fermeture, un ressort qui sollicite le récipient (18) dans la position d'ouverture et un mécanisme de verrouillage (20) pour verrouiller le récipient (18) dans la position de fermeture, le mécanisme de verrouillage (20) relâchant le récipient (18) hors de la position de fermeture par action de pression sur le récipient (18) à l'encontre de la force du ressort pour amener le récipient (18) dans une position d'enfoncement, et l'agencement de réceptacle comprenant en outre un corps de blocage (22) qui est sollicité par ressort jusque dans une position de repos normale et qui peut être amené sous l'effet de forces d'inertie jusque dans une position de blocage active, le corps de blocage (22) permettant, dans la position de repos normale, un mouvement de pivotement libre du récipient (18) et, dans la position de blocage, bloquant le mouvement du récipient (18) depuis la position fermée jusque dans la position enfoncée, **caractérisé en ce que** le dispositif de blocage présente un élément d'engagement (26) qui est fixé au récipient (18) ou au corps de boîtier (12), le corps de blocage (22) étant monté mobile sur l'autre élément respectif qui est soit le récipient (18) soit le corps de boîtier (12), le corps de blocage (22) ayant une configuration (24) et l'élément d'engagement (26) ayant également une configuration (26), les configurations (24) pouvant s'adapter l'une dans l'autre lorsque le corps de blocage (22) se trouve dans la position de repos normale et le récipient (18) se trouve dans la position enfoncée, et l'élément d'engagement (26) venant buter sur le corps de blocage (22) lorsque le corps de blocage (22) se trouve dans la position de blocage active et le récipient (18) se déplace depuis la position de fermeture jusque dans la position enfoncée.

2. Agencement selon la revendication 1, **caractérisé en ce que** le corps de blocage (22) est monté mobile sur le corps de boîtier (12).

3. Agencement selon la revendication 1 ou la revendication 2, **caractérisé en ce que** le corps de blocage (22) est déplaçable en translation.

4. Agencement selon l'une des revendications 1 à 3, **caractérisé en ce que** le corps de blocage (22) est guidé dans une rainure conformée sur le corps de boîtier (12).

5. Agencement selon la revendication 1, **caractérisé en ce que** la configuration du corps de blocage (22) est un creux (24).
